# EUROPÄISCHE PATENTSCHRIFT

(11) **EP 0 482 279 B1**
(45) Veröffentlichungstag und Bekanntmachung des Hinweises auf die Patenterteilung: **08.01.1997**
(21) Anmeldenummer: 91102782.9
(22) Anmeldetag: 26.02.1991
(51) Int. Cl.: H04J 3/16

(54) **Anordnung zum Umsetzen von untergeordneten digitalen Übertragungsbändern in übergeordnete Signale in der synchronen digitalen Hierarchie**
Circuit for converting digital tributaries in higher order signals in the synchronous digital hierarchy
Dispositif pour convertir des bandes passantes subordonnées et numériques dans des signaux superposés dans la hierarchie synchrone de signaux numériques

(30) Priorität: 26.10.1990 DE 4034107
(43) Veröffentlichungstag der Anmeldung: 29.04.1992
(73) Patentinhaber: ROBERT BOSCH GMBH, 70442 Stuttgart (DE)
(72) Erfinder: Schmitz, Johannes, Dipl.-Ing., W-7150 Backnang (DE)

(56) Entgegenhaltungen:
- WO-A-90/06645
- IEEE International Conference on Communications 1990; 15.- 19. April 1990 Atlanta , US ; Band 2 , Seiten 381 - 390 ; H. KLINGER ET AL. : ' A 2.4 GBIT/S SYNCHRONOUS OPTICAL FIBER TRANSMISSION SYSTEM'

## Beschreibung

Zu der Übertragung mit Hilfe der synchronen digitalen Hierarchie (SDH) ist der sogenannte synchrone Transport-Modul (STM 1) mit einer Bitrate von 155,52 Mbit/s als Grundeinheit empfohlen worden.

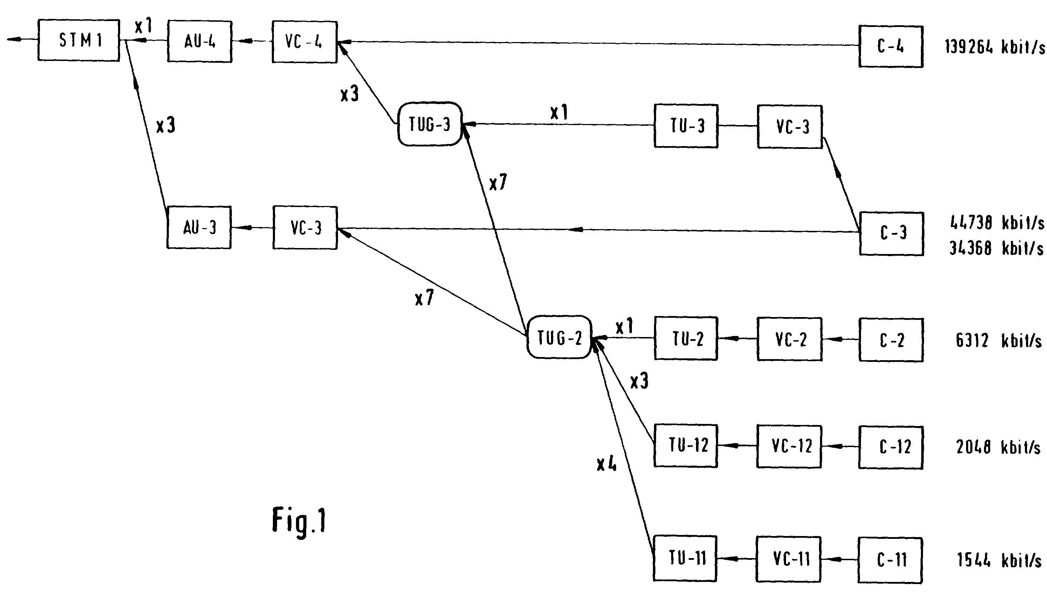

In Figur 1 ist gezeigt, welche Möglichkeiten und Wege der Zusammenfassung untergeordneter Übertragungsbänder mit niedrigeren Bitraten vorgesehen werden sollten und wie die Zwischenstufen benannt werden.

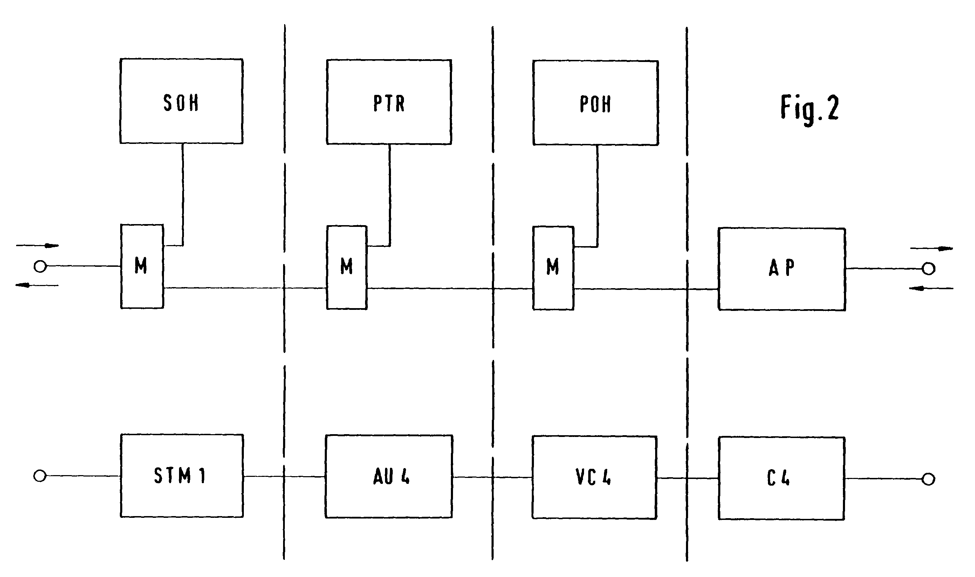

Um ein plesiochrones H4-Signal mit 140 Mbit/s in ein STM1-Signal überzuführen, müssen folgende Vorgaben gemäß der Empfehlung G 708 CCITT beachtet werden:
- Mit Hilfe eines positiven Stopfverfahrens muß die Anpassung des plesiochronen H4-Signals an das synchrone Netz vorgenommen werden. Es wird der sogenannte Container C4 gebildet, der die Nutzlast H4 enthält.
- Aus dem Container C4 entsteht durch Hinzufügen des Path-Oberhead POH der sogenannte virtuelle Container VC4. Der Rahmen enthält neben der Nutzlast H4 den Path-Overhead POH.
- Durch Hinzusetzen des Pointers PTR, wird die sogenannte Verwaltungseinheit AU4 gebildet. Der Rahmen enthält nun die Nutzlast H4, den Path-Overhead POH und den Pointer AU4.
- In einem weiteren Schritt wird der umfangreiche Section-Overhead SOH hinzugefügt, der das STM1-Signal vervollständigt. Der STM1-Rahmen setzt sich nun aus der Nutzlast H4, dem Path-Overhead POH, dem Pointer AU4 sowie dem Section-Overhead SOH zusammen (Fig. 2).

Für die Auslagerung eines H4-Datenstromes aus einem STM1-Signal sind die Schritte in umgekehrter Richtung vorzunehmen.

Ähnliches gilt für die Einlagerung der in Figur 1 gezeigten anderen plesiochronen Übertragungsbänder in das synchrone Transport-Modul STM1.

Aufgabe der vorliegenden Erfindung ist es, eine Anordnung und Verfahren anzugeben, die es gestatten, mit einer Ausgestaltung der Anordnung wahlweise sowohl das H4-Signal als auch die Signale TUG3 oder VC3 in den STM1-Rahmen einzulagern und auch zurückzugewinnen.

Anhand der Figuren soll jetzt die Anordnung nach der Erfindung näher erläutert werden.

Aus Figur 1 erkennt man, daß die Transporteinheit-Gruppe TUG3 einmal die Bitraten 34368 Kbit/s sowie 44736 Kbit/s über den Pfad C-3,VC-3,TU-3 oder die Bitraten 1544,2048 oder 6312 Kbit/s über die Transporteinheit-Gruppe TUG-2 aufnehmen kann. Drei Transporteinheit-Gruppen TUG-3 können in den virtuellen Container VC4 eingelagert werden.

Figur 1 zeigt weiter, daß der Transport-Modul STM1 auch aus drei Verwaltungseinheiten AU-3 durch Hinzufügen des Section-Overhead SOH gebildet werden kann.

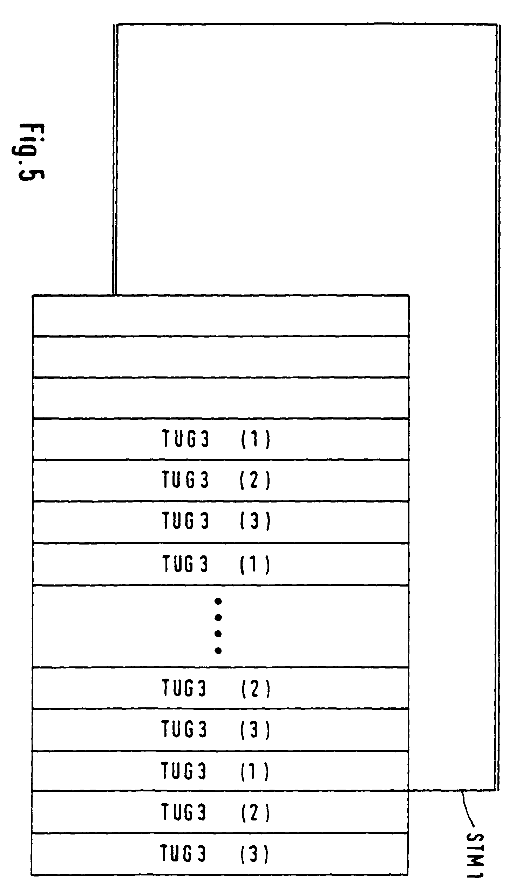

Aus der CCITT-Empfehlung G 709 ergibt sich, wie der virtuelle Container VC-3 aufgebaut ist und dieser entweder zu einem TUG3- oder zu einem AU3-Signal durch Hinzufügen der Pointer in der vierten Zeile des SOH-Blockes ergänzt wird, Das wird gezeigt in den Figuren 5, 6 und 7, bzw. 9, 10 und 11. Der Pointer zeigt auch hier, wie bei allen anderen Signalzusammensetzungen, immer auf den Beginn des virtuellen Containers im STM1-Rahmen.

Dadurch, daß alle außer dem H4-Signal in Figur 1 angegebenen plesiochronen Bitraten über die entsprechenden Zubringerwege in die oben genannten Quellensignale einmünden und diese von der Schaltung nach den Ansprüchen als Kopfstation aufgenommen werden können, ergeben sich durch Mehrfachnutzung der erfindungsgemäßen Schaltungsanordnung für diese verschiedene Einzelfälle.

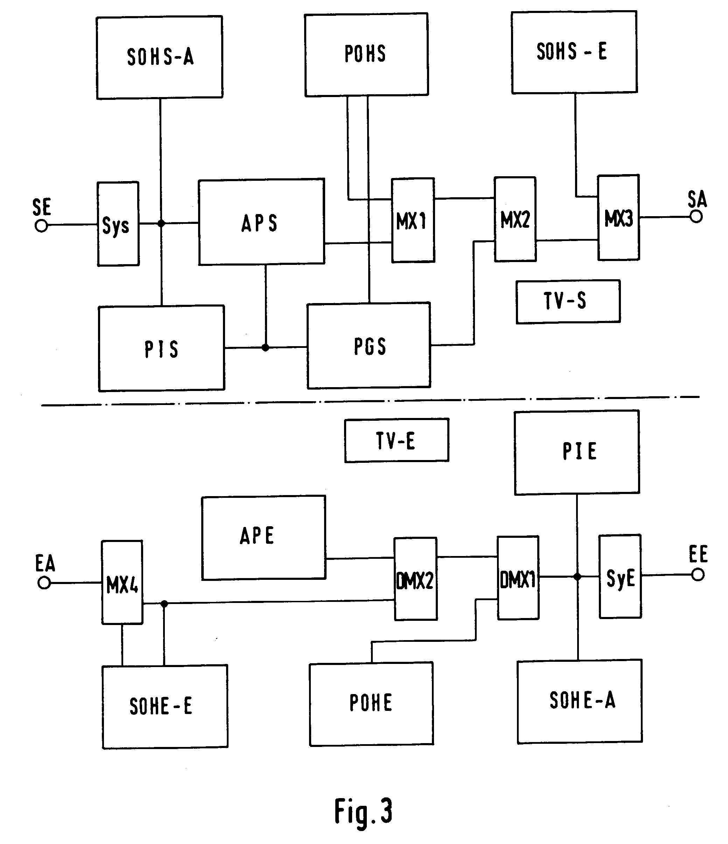

Zunächst wird in der Figur 3 die erfindungsgemäße Anordnung allgemein dargestellt. Die Anordnung ist in eine Sende- und eine Empfangsseite aufgeteilt. Das ist angedeutet durch die strichpunktiert gezeigte Linie quer über die Mitte der Figur. Oberhalb dieser Linie ist die Sendeseite, unterhalb die Empfangsseite gezeigt. Links oben ist der Eingang der Sendeseite SE, rechts unten der der Empfangsseite EE. Entsprechend liegen die jeweiligen Ausgänge SA bzw. EA. Jeder Seite ist eine Taktversorgung zugeordnet, die Taktversorgung TV-S der Sendeseite, die Taktversorgung TV-E der Empfangsseite. Auf der Sendeseite finden sich, folgend auf den Eingang, die Einrichtungen Synchronisierung SYS, Section-Overhead-Auswertung SOHS-A, die Pointerinterpretation PIS, die Taktanpassung APS, die Generierung des Path-Overhead POHS, die Pointergeneration PGS und die Section-Overhead-Erzeugung SOHS-E. Dazu gehören Multiplexer MX1 - MX3, die die verschiedene Signale zusammenfügen. Auf der Empfangsseite folgt auf den Eingang ebenfalls eine Synchronisierungs-Einrichtung SYE, eine Section-Overhead-Auswertung SOHE-A, eine Pointerinterpretation PIE, eine Path-Overhead-Auswertung POHE, eine Taktanpassung APE und eine Section-Overhead-Erzeugung SOHE-E. Dazu gehören der Multiplexer MX4 sowie die Demultiplexer DMX1 und DMX2, um verschiedene Signale zusammenzufügen bzw. zu trennen.

Für jede mögliche Betriebsart ist im folgenden eine Figur vorgesehen, bei der die aktiven Einrichtungen jeweils schraffiert sind.

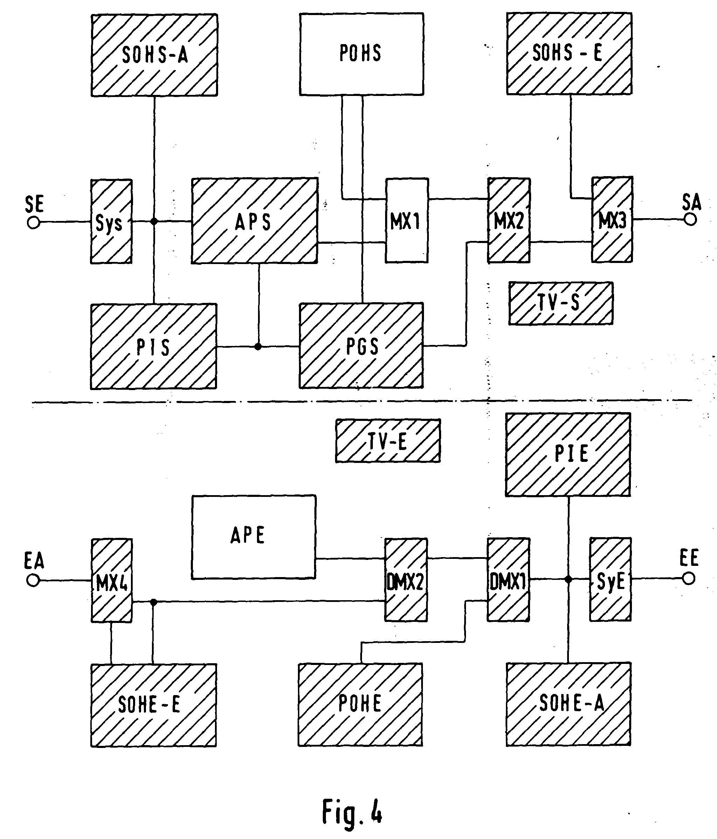

In einer möglichen Betriebsart soll ein vollständiges STM1-Signal auf der Sendeseite an einen Netzknoten angepaßt und/oder ein weiteres auf der Empfangsseite durchgeschaltet werden (Fig. 4)

Das ankommende STM1-Signal wird am Eingang SE zunächst durch die Einrichtung SYS synchronisiert, durch die Einrichtung SOHS-A wird der Section-Overhead ausgewertet und durch die Einrichtung PIS der Pointer überwacht. Nach einer Taktanpassung zwischen dem kommenden und dem gehenden System in der Einrichtung APS werden in der Einrichtung PGS die Pointer gegebenenfalls korrigiert.Das Einfügen des Path-Overhead in der Einrichtung POHS entfällt. Die jeweiligen Signale werden wieder über die Multiplexer MX1-MX3 zusammengefügt und am Ende der Sendeseite der erfindungsgemäßen Anordnung wird ein neuer Section-Overhead (SOHS-E) hinzugefügt. Am Ausgang SA erscheint dann das an das gehende System angepaßte STM1-Signal.

In Figur 4, unterer Teil, sind die für eine weitere Betriebsart notwendigen Teile der erfindungsgemäßen Anordnung schraffiert gezeichnet. Ein ankommendes STM1-Signal wird vom Eingang EE zum Ausgang EA der Empfangsseite ohne Taktanpassung durchgeschaltet. Nach der Synchronisation in SYE werden in der Einrichtung PIE die Pointer überwacht und in den Einrichtungen POHE und SOHE-A der Path- bzw. der Section-Overhead ausgewertet. Die Einrichtung APE ist dabei unwirksam geschaltet. Am Ende der Empfangsseite kann ein neuer Section-Overhead (SOHE-E)hinzugefügt werden.

Nach Figur 1 entstehen TUG-3-Übertragungsbänder (TUG = Transport-Unit-Group) über die Einlagerung von Übertragungssystemen mit 44736 KBits/s bzw. 34368 Kbit/s in Container C-3, Weiterverarbeitung durch virtuelle Container VC-3, Transport-Einheiten TU-3.

In einen STM1-Rahmen passen also 3 solcher TUG-3 Übertragungsbänder.

Um nun solche 3 TUG-3-Bänder mit Hilfe der erfindungsgemäßen Schaltungsanordnung in ein STM1-System einordnen zu können, werden zunächst mit Hilfe von Multiplexern und einer Parallel-Serienwandlung die 3 Bänder in einem Rahmen entsprechend der STM1-Übertragungsbitrate untergebracht. Das ist angedeutet in Figur 5. Diesem Signal werden ein Path-Overhead POH (Fig. 6) ein Rahmenkennungswort und ein Pointer zugefügt (Fig 6+7), der einem AU4-Pointer entspricht. Damit ist ein Signal entstanden, das durch die erfindungsgemäße Schaltung zu einem STM-1-Signal verarbeitet werden kann, aber weder den Section-Overhead noch den VC4-Path-Overhead enthält.

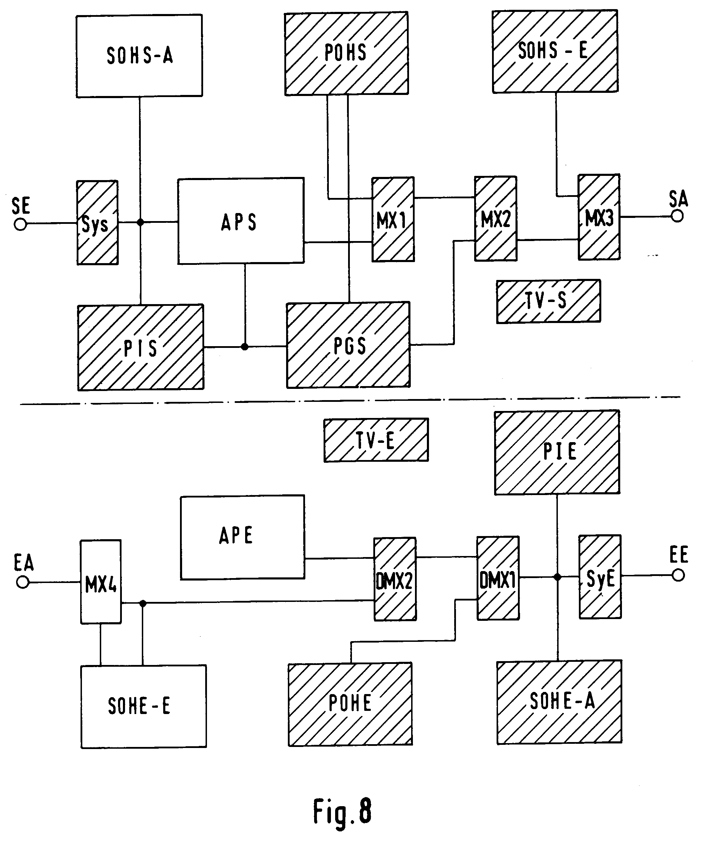

Zunächst wird dieses Signal, wie in Figur 8 dargestellt, mit Hilfe des Rahmenkennungswortes in der Einrichtung SYS einer Synchronisation unterzogen. Da kein Section-Overhead vorhanden ist, ist die Section-Overhead-Auswertung SOHS-A unwirksam, Der AU4-Pointer wird in PIS interpretiert und gegebenenfalls durch PGS korrigiert. Die Taktanpassung APS ist unwirksam, da wegen Taktsynchronität keine Taktanpassung erfolgen muß. Durch POHS wird ein Path-Overhead hinzugefügt und im SOHS-E ein Section-Overhead erzeugt und durch MX3 hinzugefügt. Am Ausgang SA erscheint ein STM1-Rahmen mit eingelagerten 3 TUG3-Bändern.

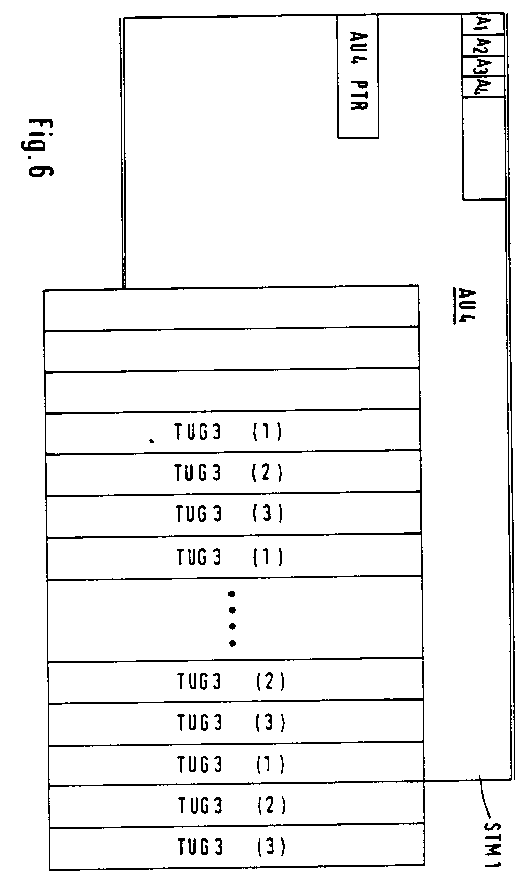

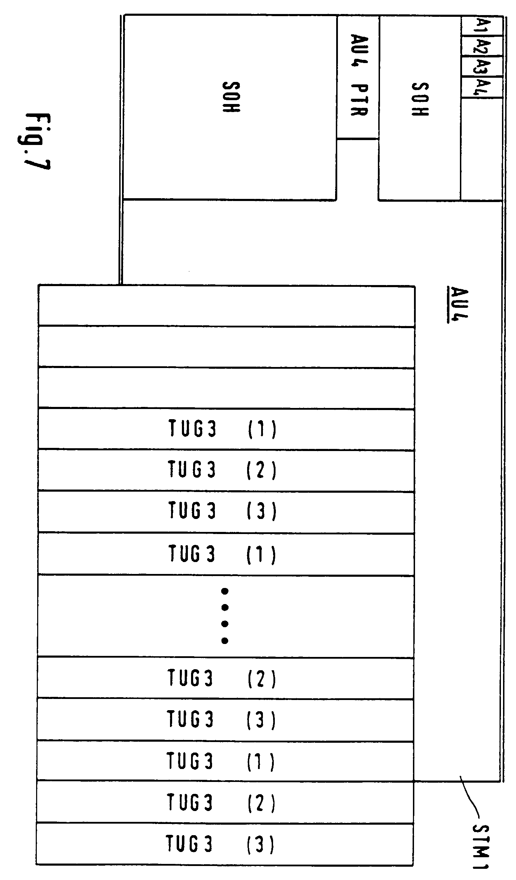

Eine weitere Betriebsart ist dargestellt im unteren Teil von Figur 8. Aus einem STM1-Signal mit 3 eingelagerten TUG3-Bändern sollen diese TUG3-Bänder wiedergewonnen werden. In diesem Fall liegt an dem Eingang EE der Empfangsseite der erfindungsgemäßen Anordnung ein STM1-Signal der vorher beschriebenen Art an. Dabei sind, wie gezeigt in Figur 7, in den STM1-Rahmen 3 TUG-3-Bänder eingelagert. Aus dem STM1-Signal werden nach der Synchronisierung in SYE die Pointer in PIE, der Section-Overhead in SOHE-A und der Path-Overhead in POHE ausgewertet. Eine Taktanpassung ist nicht erforderlich und auch ein neuer Section-Overhead wird nicht mehr benötigt. Daher sind die Einrichtungen APE und SOHE-E unwirksam geschaltet. Am Ausgang erscheinen 3 TUG-3-Bänder, wie in Figur 6 gezeigt.

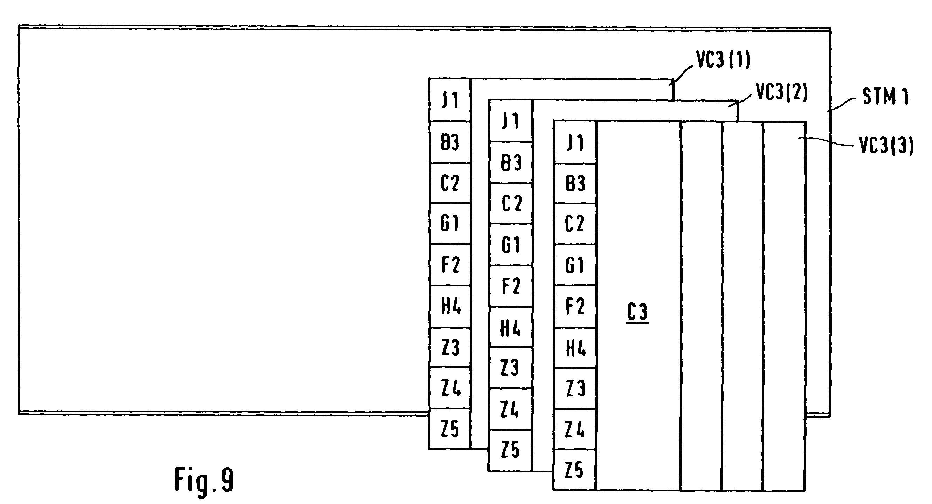

Die Figuren 9 - 12 gelten für die Betriebsarten, die sich mit der Übertragung von STM1-Signalen befassen, in die 3 AU-Signale eingelagert sind.

In dieser Betriebsart werden außerhalb der Schaltungsanordnung nach Anspruch 1 die virtuellen Container VC-3 mit den zugeordneten Pointern im STM1-Rahmen eingelagert. Die erwähnten Pointer haben im allgemeinen den Wert Null, wie bereits zu anderen Pointern gesagt wurde.

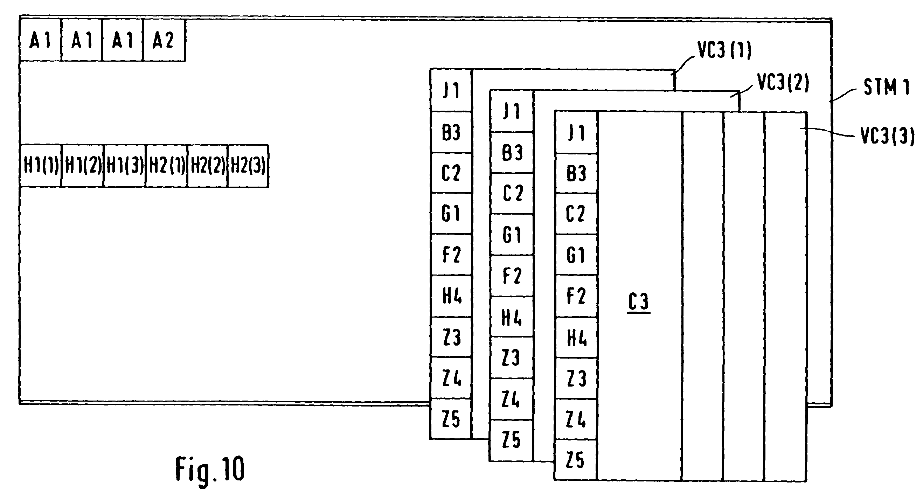

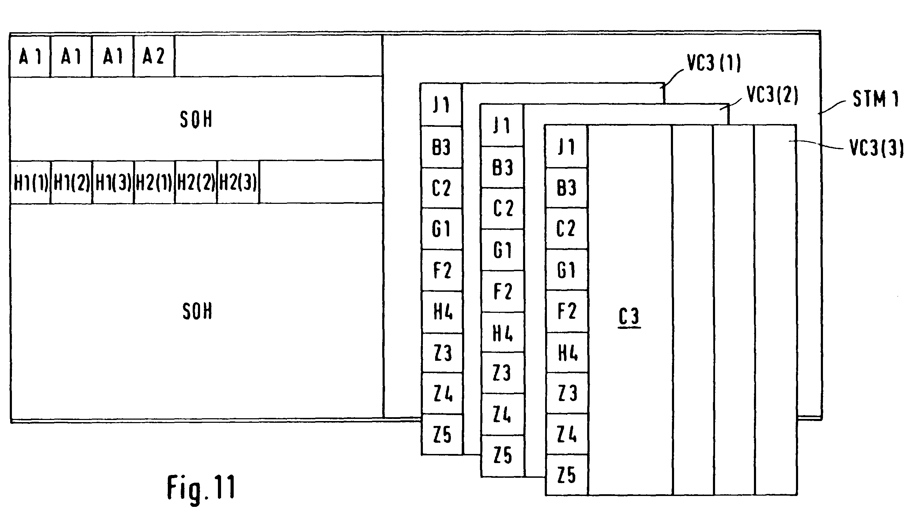

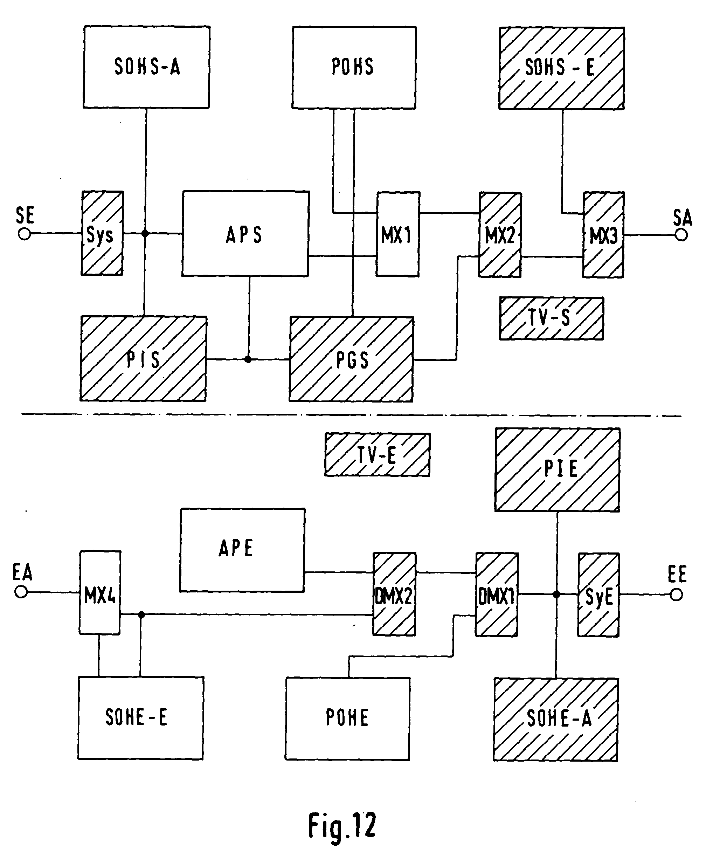

Das so gebildete Quellensignal 3 x AU3 ist zwar taktgleich, aber nicht phasensynchron mit der Taktversorgung der erfindungsgemäßen Anordnung. Dieses Quellensignal enthält zwar die AU3-Pointer, aber noch keinen Section-Overhead und damit auch kein Rahmenkennungswort. Um das Signal mit Hilfe der Anordnung nach Anspruch 1 verarbeiten zu können, muß daher zunächst ein Rahmenkennungswort zugesetzt werden. In Figur 10 und 11 ist das dargestellt durch Hinzufügen von A1,A2. Danach wird der STM1-Rahmen, der die genannten 3 AU3-Signale enthält, auf die Anordnung nach Anspruch 1 gegeben. In Figur 12 ist durch Schraffierung gezeigt, welche Teile der Anordnung dazu aktiviert werden müssen. Das kommende Signal wird über den Eingang SE zunächst einer Synchronisierung durch SYS unterworfen, die Auswertung des Section-Overhead in SOHS-A, die Taktanpassung an den sendeseitigen Takt in APS sowie die Eingabe des Path-Overhead in POHS entfallen. Pointeroperationen in PIS und PGS werden durchgeführt. Durch Hinzufügen des Section-Overhead in SOHS-E entsteht am Ausgang SA ein vollständiges neues STM1-Signal.

In umgekehrter Richtung, Figur 12, untere Hälfte, wird das STM1-Signal zunächst durch SYE synchronisiert, um in SOHE-A den Section-Overhead auszuwerten, um den Section-Overhead in SOHE-A zugänglich zu machen und die Pointer in PIE interpretieren zu können. Die Anpassung APE, die Auswertung des Path-Overhead in POHE sowie die Eingabe des Section-Overhead in SOHE-E werden nicht benötigt.

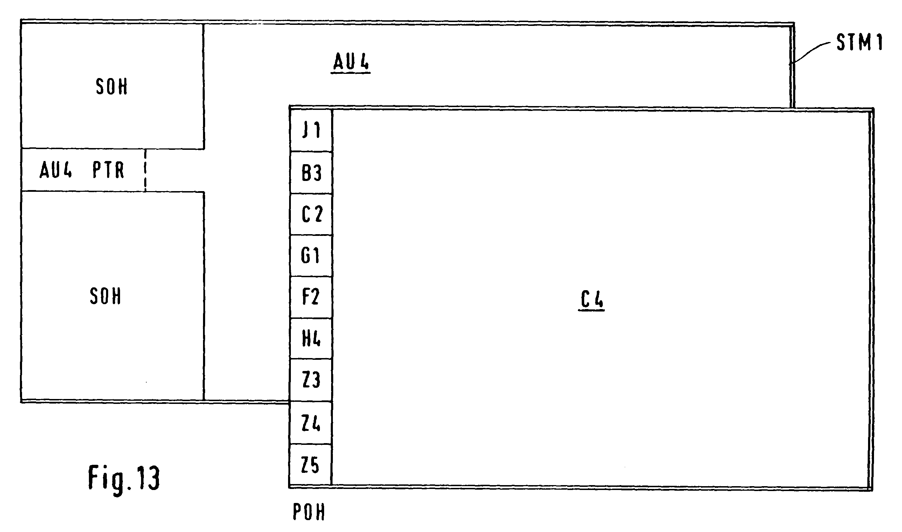

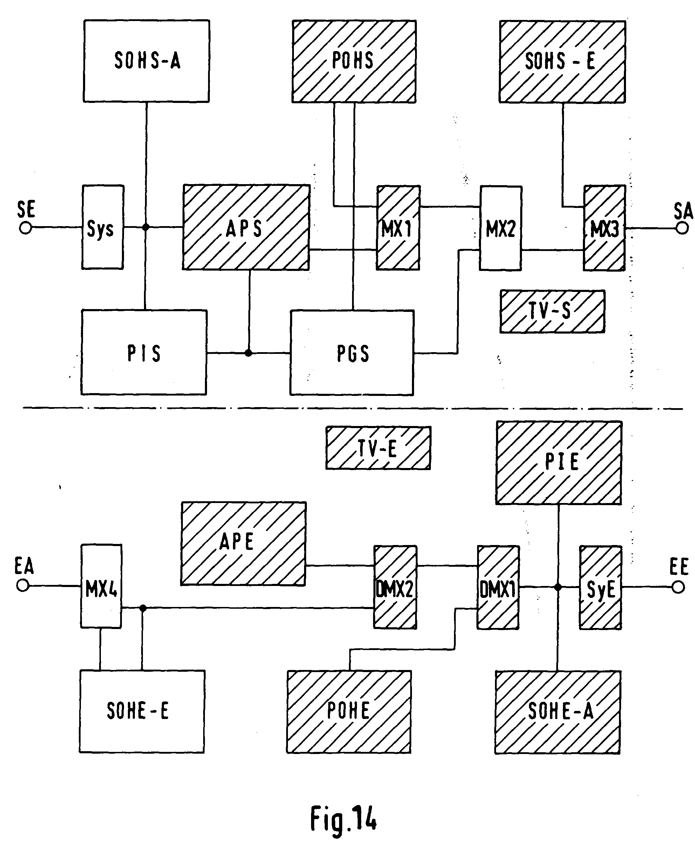

Im Betriebszustand H4-Senden (Einlagerung des Signals H4 in den STM1-Rahmen) dargestellt in Figur 13, werden die Einrichtungen SOHS-A, SYS, PIS und PGS nicht benötigt, wie in Figur 14 dargestellt

Das plesiochrone H4-Signal wird in der Anpassungseinrichtung APS nach einem positiven Stopfverfahren an das synchrone Taktsignal angepaßt. Es Entsteht der Container C4. Nach den bereits erwähnten Schritten wird durch Hinzufügen des Path-Overhead in POHS, des AU4-Nullpointers und des Section-Overhead durch SOHS-E das STM1-Signal, das z.B. zu einer Multiplexeinrichtung weitergereicht wird, vervollständigt.

In umgekehrter Richtung (Empfangsseite) wird das z.B. von einer Demultiplexeinrichtung kommende STM1-Signal zunächst einer Synchronisation in SYE unterworfen, um den Section-Overhead durch SOHE-A auswerten zu können.

Danach folgt die Pointerinterpretation in PIS, die eine auf dem Transportweg möglicherweise stattgefundene Pointeränderung, die den virtuellen Container VC4 verschoben hat, erkennen kann. Erst dann, wenn die VC4-Position bekannt ist, kann der Path-Overhead in POHE ausgewertet und in der Anpassungseinrichtung APE nach einem positiven Destopfverfahren das H4-Signal wiedergewonnen werden. In diesem Betriebszustand hat die Einrichtung SOHE-E keine Bedeutung.

## Patentansprüche

1. Anordnung zum Umsetzen von untergeordneten, digitalen Übertragungsbändern in übergeordnete STM1-Signale und umgekehrt und/oder Durchschalten dieser übergeordneten STM1-Signale in der synchronen digitalen Hierarchie, dadurch gekennzeichnet,
daß aufeinanderfolgend sendeseitig vorgesehen sind:
ein Eingang (SE) der Sendeseite;
eine Synchronisiereinheit (SYS);
eine Einheit zur Taktanpassung (APS);
eine Einheit zum Einfügen des Path-Overheads in das Übertragungsband (MX1);
eine Einheit zum Einfügen der generierten Pointer in das Übertragungsband (MX2):
eine Einheit zum Einfügen des Section-Overhead (MX3);
daß der Einheit zum Einfügen des Path-Overheads eine Einheit zur Eingabe des Path-Overheads (POHS) zugeordnet ist,
daß der Einheit zum Einfügen der generierten Pointer eine Einheit zur Pointergenerierung (PGS) zugeordnet ist,
daß der Einheit zum Einfügen des Section-Overhead (MX3) eine Einheit zur Eingabe des Section-Overhead (SOHS-E) zugeordnet ist,
daß eine Einheit zur Auswertung des Section-Overhead (SOHS-A) und eine Einheit zur Pointerinterpretation (PIS) mit dem Eingang der Einheit zur Taktanpassung (APS) verbunden sind und
daß eine Einheit zur Taktversorgung (TVS) vorgesehen ist;
daß weiter aufeinanderfolgend empfangsseitig vorgesehen sind:
ein Eingang (EE) der Empfangsseite;
eine Synchronisiereinheit (SYE);
eine Einheit zur Ausfügung des Path-Overheads (DMX1) eine Einheit zur Aufteilung des Hauptsignalpfades (DMX2);
eine Einheit zum Einfügen des Section-Overhead (MX4);
daß der Einheit zur Ausfügung des Path-Overheads (DMX1) eine Einheit zur Auswertrung des Path-Overheads (POHE) zugeordnet ist,
daß der Einheit zur Aufteilung des Hauptsignalpfades (DMX2) eine Einheit zur Taktanpassung (APE) zugeordnet ist,
daß der Einheit zum Einfügen des Section-Overhead (MX4) eine Einheit zur Eingabe des Section-Overhead (SOHE-E) zugeordnet ist,
daß eine Einheit zur Auswertung des Section-Overhead (SOHE-A) und eine Einheit zur Pointerinterpretation (PIE) mit dem Eingang der Einheit zur Ausfügung des Path-Overheads (DMX 1) verbunden sind
und daß eine Einheit zur Taktversorgung (TV-E) vorgesehen ist.

2. Anordnung nach Anspruch 1 zum Durchschalten eines STM1-Signals mit Taktanpassung, derart ausgestaltet, daß das STM1-Signal an den Eingang der Sendeseite gelegt wird und folgende Einheiten aktiviert werden:
die Synchronisiereinheit (SYS);
die Einheit zur Auswertung des Section-Overhead (SOHS-A);
die Einheit zur Pointerinterpretation (PIS);
die Einheit zur Taktanpassung (APS);
die Einheit zur Pointergenerierung (PGS);
die Einheit zum Einfügen der generierten Pointer in das Übertragungsband (MX2);
die Einheit zur Eingabe des Section-Overhead (SOHS-E);
die Einheit zum Einfügen des Section-Overhead (MX3);
die Einheit zur Taktversorgung (TV-S).

3. Anordnung nach Anspruch 1 zum Durchschalten eines STM-1-Signals ohne Taktanpassung, derart ausgestaltet, daß das STM-1-Signal an den Eingang der Empfangsseite gelegt wird und folgende Einheiten aktiviert werden:
die Synchronisiereinheit (SYE);
die Einheit zur Auswertung des Section-Overhead (SOHE-A);
die Einheit zur Pointerinterpretation (PIE);
die Einheit zum Ausfügen des Path-Overheads (DMX1);
die Einheit zur Auswertung des Path-Overheads (POHE);
die Einheit zur Aufteilung des Hauptsignalpfades (DMX2);
die Einheit zur Eingabe des Section-Overhead (SOHE-E);
die Einheit zum Einfügen des Section-Overhead (MX4);
die Einheit zur Taktversorgung (TV-E).

4. Anordnung nach Anspruch 1 zum Umsetzen dreier seriell in einem STM1-Rahmen eingelagerten TUG-3-Bänder in ein STM1-Signal, derart ausgestaltet, daß ein Rahmenkennungswort und ein Pointer hinzugefügt werden, daß dieses vorläufige Übertragungsband an den Eingang der Sendeseite gelegt wird und folgende Einheiten auf der Sendeseite aktiviert werden:
die Synchronisiereinheit (SYS);
die Einheit zur Pointerinterpretation (PIS);
die Einheit zur Eingabe des Path-Overheads (POHS);
die Einheit zum Einfügen des Path-Overheads in das; Übertragungsband (MX1);
die Einheit zur Pointergenerierung (PGS);
die Einheit zum Einfügen der generierten Pointer in das; Übertragungsband (MX2);
die Einheit zur Eingabe des Section-Overhead (SOHS-E);
die Einheit zum Einfügen des Section-Overhead (MX3);
die Einheit zur Taktversorgung (TV-S).

5. Anordnung nach Anspruch 1 zum Umsetzen eines STM1-Signals, ih das drei TUG3-Signale eingelagert sind, in die drei TUG3-Signale derart ausgestaltet, daß das STM1-Signal an den Eingang der Empfangsseite der Anordnung gelegt wird und folgende Einheiten der Empfangsseite aktiviert werden:
die Synchronisiereinheit (SYE);
die Einheit zur Auswertung des Section-Overhead (SOHE-A);
die Einheit zur Pointerinterpretation (PIE);
die Einheit zur Ausfügung des Path-Overheads (DMX1);
die Einheit zur Auswertung des Path-Overheads (POHE);
die Einheit zur Aufteilung des Hauptsignalpfades (DMX2);
die Einheit zur Taktversorgung (TV-E)
und daß das Signal am Ausgang der Empfangsseite der Anordnung durch Serien-Parallel-Umsetzer in die drei TUG3-Signale aufgeteilt wird.

6. Anordnung nach Anspruch 1 zum Umsetzen von drei AU3-Signalen in ein STM1-Signal, derart ausgestaltet, daß die in ein STM1-Übertragungsband eingelagerten AU3-Signale zusammen mit dem Rahmenkennungswort an den Eingang der Sendeseite der Anordnung angelegt und folgende Einheiten aktiviert werden:
die Synchronisiereinheit (SYS);
die Einheit zur Pointerinterpretation (PIS);
die Einheit zur Pointergenerierung (PGS);
die Einheit zum Einfügen der generierten Pointer in das übertragungsband (MX2);
die Einheit zur Eingabe des Section-Overhead (SOHS-E);
die Einheit zum Einfügen des Section-Overhead (MX2);
die Einheit zur Taktversorgung (TV-S).

7. Anordnung nach Anspruch 1 zum Umsetzen eines STM1-Signals, in das drei AU3-Signale eingelagert sind, derart ausgestaltet, daß das STM1-Signal an den Eingang der Empfangsseite angelegt wird und folgende Einheiten aktiviert werden
die Synchronisiereinheit (SYE);
die Einheit zur Auswertung des Section-Overhead (SOHE-A);
die Einheit zur Pointerinterpretation (PIE);
die Einheit zur Ausfügung des Path-Overheads (DMX1);
die Einheit zur Aufteilung des Hauptsignalpfades (DMX2);
die Einheit zum Einfügen des Section-Overhead (MX4);
die Einheit zur Taktversorgung (TV-E).

8. Anordnung nach Anspruch 1 zum Umsetzen eines H4-Signals in ein STM1-Signal, derart ausgestaltet, daß ein H4-Signal an den Eingang der Sendeseite der Anordnung gelegt wird und auf der Sendeseite folgende Einheiten aktiviert werden:
die Einheit zur Taktanpassung (APS);
die Einheit zur Eingabe des Path-Overheads (POHS);
die Einheit zum Einfügen des Path-Overheads in das Übertragungsband (MX1);
die Einheit zur Eingabe des Section-Overhead (SOHS-E);
die Einheit zum Einfügen des Section-Overhead (MX3);
die Einheit zur Taktversorgung (TV-S).

9. Anordnung nach Anspruch 1 zum Umsetzen eines STM1-Signals mit eingelagertem H4-Signal, derart ausgestaltet, daß das STM1-Signal an den Eingang der Empfangsseite der Anordnung gelegt wird und folgende Einheiten aktiviert werden:
die Synchronisierungseinheit (SYE);
die Einheit zur Auswertung des Section-Overhead (SOHE-A);
die Einheit zur Pointerinterpretation (PIE);
die Einheit zur Ausfügung des Path-Overheads (DMX1);
die Einheit zur Auswertung des Path-Overheads (PÖHE);
die Einheit zur Aufteilung des Hauptsignalpfades (DMX2);
die Einheit zur Taktanpassung (APE);
die Einheit zur Taktversorgung (TV-E).

## Claims

1. Arrangement for converting subordinate, digital transmission bands into superordinate STMI signals, and vice-versa, and/or for switching through these superordinate STM1 signals in the synchronous digital hierarchy, characterized
in that there are provided in succession at the transmission end:
a transmission-end input (SE);
a synchronizing unit (SYS);
a clock adaptation unit (APS);
a unit for inserting the path overhead into the transmission band (MX1);
a unit for inserting the generated pointers into the transmission band (MX2):
a unit for inserting the section overhead (MX3);
in that the unit for inserting the path overhead is assigned a unit for inputting the path overhead (POHS),
in that the unit for inserting the generated pointers is assigned a unit for pointer generation (PGS),
in that the unit for inserting the section overhead (MX3) is assigned a unit for inputting the section overhead (SOHS-E),
in that a unit for evaluating the section overhead (SOHS-A) and a unit for pointer interpretation (PIS) are connected to the input of the clock adaptation unit (APS) and
in that a clock supply unit (TVS) is provided;
in that, in addition, there are provided in succession at the reception end:
a reception-end input (EE);
a synchronizing unit (SYE);
a unit for extracting the path overhead (DMX1)
a unit for splitting the main signal path (DMX2);
a unit for inserting the section overhead (MX4);
in that the unit for extracting the path overhead (DMX1) is assigned a unit for evaluating the path overhead (POHE),
in that the unit for splitting the main signal path (DMX2) is assigned a clock adaptation unit (APE),
in that the unit for inserting the section overhead (MX4) is assigned a unit for inputting the section overhead (SOHE-E),
in that a unit for evaluating the section overhead (SOHE-A) and a unit for pointer interpretation (PIE) are connected to the input of the unit for extracting the path overhead (DMX1)
and in that a clock supply unit (TV-E) is provided.

2. Arrangement according to Claim 1 for switching through an STM1 signal with clock adaptation, configured such that the STM1 signal is applied to the transmission-end input and the following units are activated:
the synchronizing unit (SYS);
the unit for evaluating the section overhead (SOHS-A);
the unit for pointer interpretation (PIS);
the clock adaptation unit (APS);
the unit for pointer generation (PGS);
the unit for inserting the generated pointers into the transmission band (MX2);
the unit for inputting the section overhead (SOHS-E);
the unit for inserting the section overhead (MX3); the clock supply unit (TV-S).

3. Arrangement according to Claim 1 for switching through an STM1 signal without clock adaptation, configured such that the STM1 signal is applied to the reception-end input and the following units are activated:
the synchronizing unit (SYE);
the unit for evaluating the section overhead (SOHE-A);
the unit for pointer interpretation (PIE);
the unit for extracting the path overhead (DMX1);
the unit for evaluating the path overhead (POHE);
the unit for splitting the main signal path (DMX2);
the unit for inputting the section overhead (SOHE-E);
the unit for inserting the section overhead (MX4);
the clock supply unit (TV-E).

4. Arrangement according to Claim 1, for converting three TUG3 bands integrated into an STM1 frame into an STM1 signal, configured such that a frame identification word and a pointer are added, that this temporary transmission band is applied to the transmission-end input and the following units at the transmission end are activated:
the synchronizing unit (SYS);
the unit for pointer interpretation (PIS);
the unit for inputting the path overhead (POHS);
the unit for inserting the path overhead into the transmission band (MX1);
the unit for pointer generation (PGS);
the unit for inserting the generated pointers into the transmission band (MX2);
the unit for inputting the section overhead (SOHS-E);
the unit for inserting the section overhead (MX3);
the clock supply unit (TV-S).

5. Arrangement according to Claim 1 for converting an STM1 signal into which three TUG3 signals are integrated into the three TUG3 signals, configured such that the STM1 signal is applied to the input of the reception end of the arrangment and the following units of the reception end are activated:
the synchronizing unit (SYE);
the unit for evaluating the section overhead (SOHE-A);
the unit for pointer interpretation (PIE);
the unit for extracting the path overhead (DMX1);
the unit for evaluating the path overhead (POHE);
the unit for splitting the main signal path (DMX2);
the clock supply unit (TV-E)
and that the signal at the output of the reception side of the arrangement is split by serial-parallel converters into the three TUG3 signals.

6. Arrangement according to Claim 1 for converting three AU3 signals into an STM1 signal, configured such that the AU3 signals integrated into an STM1 transmission band are applied, together with the frame identification word, to the input of the transmission end of the arrangement and the following units are activated:
the synchronizing unit (SYS);
the unit for pointer interpretation (PIS);
the unit for pointer generation (PGS);
the unit for inserting the generated pointers into the transmission band (MX2);
the unit for inputting the section overhead (SOHS-E);
the unit for inserting the section overhead (MX2);
the clock supply unit (TV-S).

7. Arrangement according to Claim 1 for converting an STM1 signal in which three AU3 signals are integrated, configured such that the STM1 signal is applied to the reception-end input and the following units are activated:
the synchronizing unit (SYE);
the unit for evaluating the section overhead (SOHE-A);
the unit for pointer interpretation (PIE);
the unit for extracting the path overhead (DMX1);
the unit for splitting the main signal path (DMX2);
the unit for inserting the section overhead (MX4);
the clock supply unit (TV-E).

8. Arrangement according to Claim 1, for converting an H4 signal into an STM1 signal, configured such that an H4 signal is applied to the input of the transmission end of the arrangement and the following units are activated at the transmission end:
the clock adaptation unit (APS);
the unit for inputting the path overhead (POHS);
the unit for inserting the path overhead into the transmission band (MX1);
the unit for inputting the section overhead (SOHS-E);
the unit for inserting the section overhead (MX3);
the clock supply unit (TV-S).

9. Arrangement according to Claim 1 for converting an STM1 signal with integrated H4 signal, configured such that the STM1 signal is applied to the input of the reception end of the arrangement and the following units are activated:
the synchronization unit (SYE);
the unit for evaluating the section overhead (SOHE-A);
the unit for pointer interpretation (PIE);
the unit for extracting the path overhead (DMX1);
the unit for evaluating the path overhead (POHE);
the unit for splitting the main signal path (DMX2);
the clock adaptation unit (APE);
the clock supply unit (TV-E).

## Revendications

1. Dispositif pour convertir des bandes passantes numériques subordonnées, en des signaux STM1 supérieurs et inversement, et/ou commuter ces signaux STM1 principaux en hiérarchie numérique synchrone,
caractérisé en ce que
du côté de l'émetteur on a successivement :
- une entrée (SE) pour l'émetteur,
- une unité de synchronisation (SYS),
- une unité d'adaptation d'horloge (APS),
- une unité pour insérer le chemin amont dans la bande passante (MX1),
- une unité pour insérer le pointeur généré dans la bande de transmission (MX2) :
- une unité pour insérer la section amont (MX3) ; à l'unité pour insérer le chemin amont, est associée une unité pour insérer le chemin amont (POHS),
- l'unité pour insérer le pointeur généré se voit attribuer une unité pour générer le pointeur (PGS),
- à l'unité pour insérer la section amont (MX3) est associée une unité pour insérer la section amont (SOHS-E),
- une unité pour exploiter la section amont (SOHS-A) et une unité pour interpréter le pointeur (PIS), sont reliées à l'entrée de l'unité pour l'adaptation d'horloge (APS),
- une unité d'alimentation d'horloge (TVS) est prévue, sur le côté de réception,
de manière successive on a :
- une entrée EE du côté de la section,
- une unité de synchronisation SYE,
- une unité pour exclure le chemin amont (DMX1),
- une unité pour répartir le chemin du signal principal (DMX2),
- une unité pour insérer la section amont (MX4),
- l'unité pour exclure le chemin amont (DMX1) comportant une unité pour exploiter le chemin amont (POHE),
- l'unité pour diviser le chemin du signal principal (DMX2) comprend une unité pour l'adaptation d'horloge (APE),
- l'unité pour insérer la section amont (MX4) comporte une unité pour introduire la section amont (SOHE-E),
- une unité pour exploiter la section amont (SOHE-A) et une unité pour l'interprétation du pointeur (PIE) sont reliées à l'entrée pour éliminer le chemin amont (DMX1),
- et une unité pour l'alimentation en horloge (TV-E).

2. Dispositif selon la revendication 1 pour la transmission d'un signal STM1 avec adaptation d'horloge, conçu de façon que le signal STM1 soit appliqué à l'entrée du côté émetteur et que les unités suivantes soient activées :
- l'unité de synchronisation (SYS),
- l'unité d'exploitation de la section amont (SOHS-A),
- l'unité d'interprétation de pointeur (PIS),
- l'unité d'adaptation d'horloge (APS),
- l'unité de génération du pointeur (PGS),
- l'unité pour insérer le pointeur généré dans la bande passante (MX2),
- l'unité pour insérer la section amont (SOHS-E),
- l'unité pour insérer la section amont (MX3),
- l'unité pour assurer l'alimentation en horloge (TV-S).

3. Dispositif selon la revendication 1, pour le passage d'un signal STM1 sans adaptation d'horloge,
caractérisé en ce que
il est conçu de façon que le signal STM1 soit appliqué à l'entrée du côté réception et que les unités suivantes soient activées :
- l'unité de synchronisation (SYS),
- l'unité pour l'exploitation de la section amont (SOHE-A),
- l'unité pour l'interprétation de pointeur (PIE),
- l'unité pour exclure le chemin amont (DMX1),
- l'unité pour exploiter le chemin amont (POHE),
- l'unité pour répartir le chemin du signal amont (DMX2),
- l'unité pour introduire la section amont (SOHE-E),
- l'unité pour insérer la section amont (MX4),
- l'unité pour assurer l'alimentation en horloge (TV-E).

4. Dispositif selon la revendication 1 pour convertir 3 bandes TUGT-3 insérées dans un cadre STM1, en un signal STM1 en ajoutant un mot de reconnaissance de cadre et un mot de pointeur, en appliquant cette bande passante provisoire à l'entrée de l'émetteur, et en activant les éléments suivants du côté de l'émetteur :
- l'unité de synchronisation (SYS),
- l'unité d'interprétation de pointeur (PIS),
- l'unité pour insérer le chemin amont (POHS),
- l'unité pour insérer le chemin amont dans la bande passante (MX1),
- l'unité pour générer le pointeur (PGS),
- l'unité pour ajouter le pointeur généré dans la bande passante (MX2),
- l'unité pour introduire la section amont (SOHS-E),
- l'unité pour insérer la section amont (MX3),
- l'unité pour alimenter l'horloge (TV-S).

5. Dispositif selon la revendication 1 pour convertir un signal STM1 dans lequel sont intégrés 3 signaux TUG3, en trois signaux TUG3 de façon que le signal STM1 soit appliqué à l'entrée du côté réception du dispositif, et que les unités suivantes du côté réception soient activées :
- l'unité de synchronisation (SYE),
- l'unité d'exploitation de la section amont (SOHE-A),
- l'unité d'interprétation de pointeur (PIE),
- l'unité d'élimination du chemin amont (DMX1),
- l'unité d'exploitation du chemin amont (POHE),
- l'unité pour diviser le chemin du signal principal (DMX2),
- l'unité pour l'alimentation en horloge (TV-E),
et le signal à la sortie du signal réception du dispositif est subdivisé par le convertisseur série-parallèle en trois signaux TUG3.

6. Dispositif selon la revendication 1 pour convertir trois signaux AU3 en un signal STM1, réalisé pour que les signaux AU3 insérés dans la bande passante STM1 soient appliqués en même temps que le mot de reconnaissance de cadre à l'entrée du côté émetteur du dispositif, et que les unités suivantes soient activées :
- l'unité de synchronisation (SYS),
- l'unité d'interprétation de pointeur (PIS),
- l'unité de génération de pointeur (PGS),
- l'unité pour insérer le pointeur généré dans la bande de transmission (MX2),
- l'unité pour introduire la section amont (SOHS-E),
- l'unité pour insérer la section amont (MX2),
- l'unité pour l'alimentation en horloge (TV-S).

7. Dispositif selon la revendication 1 pour convertir un signal STM1 dans lequel sont insérés trois signaux AU3, tels que le signal STM1 soit appliqué à l'entrée du côté réception et que les unités suivantes soient activées :
- l'unité de synchronisation (SYE),
- l'unité d'exploitation de la section amont (SOHE-A),
- l'unité d'interprétation de pointeur (PIE),
- l'unité pour exclure la section amont (DMX1),
- l'unité pour diviser le chemin du signal principal (DMX2),
- l'unité pour insérer la section amont (MX4),
- l'unité pour fournir l'horloge (TV-E).

8. Dispositif selon la revendication 1 pour convertir un signal H4 en un signal STM1 tel qu'un signal H4 soit appliqué à l'entrée du côté émetteur du dispositif alors que le côté récepteur se voit activé pour les parties suivantes :
- l'unité d'adaptation d'horloge (APS),
- l'unité pour introduire le chemin amont (POHS),
- l'unité pour insérer le chemin amont dans la bande passante (MX1),
- l'unité pour introduire la section amont (SOHS-E),
- l'unité pour insérer la section amont (MX3),
- l'unité pour l'alimentation en horloge (TV-S).

9. Dispositif selon la revendication 1, pour convertir un signal STM1 en signal H4 inséré, de façon que le signal STM1 soit appliqué à l'entrée du côté de réception du dispositif et que les unités suivantes soient activées :
- l'unité de synchronisation (SYE),
- l'unité d'exploitation de la section amont (SOHE-A),
- l'unité d'interprétation de pointeur (PIE),
- l'unité pour éliminer le chemin amont (DMX1),
- l'unité pour exploiter le chemin amont (POHE),
- l'unité pour diviser le chemin du signal principal (DMX2),
- l'unité pour adapter l'horloge (APE),
- l'unité pour fournir l'horloge (TV-E).
